(19) Europäisches Patentamt
European Patent Office
Office européen des brevets

(11) EP 4 121 480 B1

(12) EUROPEAN PATENT SPECIFICATION

(45) Date of publication and mention of the grant of the patent:
**27.12.2023 Bulletin 2023/52**

(21) Application number: **21712179.7**

(22) Date of filing: **19.03.2021**

(51) International Patent Classification (IPC):
***C08L 69/00*** *(2006.01)*

(52) Cooperative Patent Classification (CPC):
(C-Sets available)
**C08L 69/00;** C08L 2205/025; C08L 2205/035

(Cont.)

(86) International application number:
**PCT/EP2021/057068**

(87) International publication number:
**WO 2021/186022 (23.09.2021 Gazette 2021/38)**

# (54) HEAT RESISTANT AROMATIC POLYCARBONATE - POLYESTER COMPOSITION

HITZEBESTÄNDIGE AROMATISCHE POLYCARBONAT-POLYESTER-ZUSAMMENSETZUNG

COMPOSITION DE POLYCARBONATE-POLYESTER AROMATIQUE RÉSISTANT À LA CHALEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.03.2020 EP 20164651**
**20.03.2020 EP 20164623**
**20.03.2020 EP 20164627**

(43) Date of publication of application:
**25.01.2023 Bulletin 2023/04**

(73) Proprietor: **SABIC Global Technologies B.V.**
**4612 PX Bergen op Zoom (NL)**

(72) Inventors:
- **JHA, Roshan, Kumar**
  **6160 GA Geleen (NL)**
- **PAL, Subodh, Kumar**
  **6160 GA Geleen (NL)**
- **KHATOKAR, Rukmini**
  **6160 GA Geleen (NL)**

(74) Representative: **Algemeen Octrooi- en Merkenbureau B.V.**
**P.O. Box 645**
**5600 AP Eindhoven (NL)**

(56) References cited:
**WO-A1-2014/097196**
**US-A1- 2008 269 399**
**US-A1- 2013 317 142**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 121 480 B1

(52) Cooperative Patent Classification (CPC): (Cont.)

C-Sets
**C08L 69/00, C08L 25/12, C08L 51/04, C08L 67/02;**
**C08L 69/00, C08L 25/14, C08L 51/04, C08L 67/02;**
**C08L 69/00, C08L 51/04, C08L 67/02, C08L 67/02**

## Description

The present invention generally relates to a composition comprising from 25 - 75wt.% of aromatic polycarbonate and from 75 - 25 wt.% of polyester based on the combined weight of the aromatic polycarbonate and the polyester. The present invention further relates to an article comprising or consisting of such a composition.

Aromatic polycarbonate - polyester compositions are useful in the manufacture of articles and components for a wide range of applications, from automotive parts to electronic appliances.

Aromatic polycarbonates are generally manufactured using two different technologies. In the first technology, known as the interfacial technology or interfacial process, phosgene is reacted with bisphenol A (BPA) in a liquid phase. In this process the aromatic polycarbonate chains will grow, i.e. the molecular weight increases, until the reaction is stopped by means of addition of a chain-terminating agent, also referred to as end-capping agent. Typically, such end-capping agents are mono-hydroxy compounds such for example phenol. Due to the nature of the interfacial technology end-capping levels of the aromatic polycarbonate are very high, which means that the aromatic polycarbonate obtained via the interfacial technology will have a relatively low amount of terminal hydroxyl groups at the end of the aromatic polycarbonate chains. Consequently, such aromatic polycarbonates generally have very good long-term heat stability. Although this process produces the desired polymer, there are disadvantages associated with it. For example, phosgene is extremely toxic and hence results in safety concerns. In addition, methylene chloride, which is often used as a solvent in the interfacial process, raises environmental concerns.

Another well-known technology for the manufacture of aromatic polycarbonate is the so-called melt technology, sometimes also referred to as melt transesterification, melt process, or melt polycondensation technology. In the melt technology, or melt process, a bisphenol, typically bisphenol A (BPA), is reacted with a carbonate, typically diphenyl carbonate (DPC), in the melt phase. The reaction between DPC and BPA releases phenol, which needs to be removed from the reaction mixture in order to progress the polymerization reaction. Typically, the melt process is carried out in a number of stages with increasing temperatures and decreasing pressures until a desired molecular weight is obtained. Due to the nature of the melt process, the resulting aromatic polycarbonate typically has a significantly higher amount of terminal hydroxyl groups. Due to this, the obtained aromatic polycarbonate, in comparison with the interfacially manufactured aromatic polycarbonate, has a lower long-term heat stability performance.

Polycarbonate manufactured with the interfacial process is referred to herein as interfacial polycarbonate whereas polycarbonate manufactured with the melt process is referred to herein as melt polycarbonate.

WO 2014/097196 discloses a composition made by a process comprising melt blending (a) from 10 to 70 weight percent of a partially crystalline polyester component selected from poly(butylene terephthalate), poly(ethylene terephthalate), poly(butylene terephthalate) copolymers, poly(ethylene terephthalate) copolymers, and combinations thereof; (b) from 10 to 60 weight percent of an amorphous polycarbonate having a Fries rearrangement of greater than 150 to 10,000 ppm; (c) from 5 to 50 weight percent of a filler; and (d) optionally, from 0.01 to 10 wt.% of an antioxidant, mold release agent, colorant, stabilizer, or a combination thereof; wherein the melt blended composition has a polycarbonate aryl hydroxy end-group content of at least 300 ppm; and wherein the composition, when molded into an article having a 2.0 mm thickness, provides a near infrared transmission at 960 nanometers of greater than 45%.

WO 2017/093232 discloses a thermoplastic composition comprising 0 to 50 weight percent of a polycarbonate, 10 to 50 weight percent of a polyester carbonate copolymer, 5 to 20 weight percent of a poly(ethylene terephthalate), 20 to 50 weight percent of a poly(butylene terephthalate), and optionally 5 to 30 weight percent of an impact modifier, wherein weight percent is based on the combined amounts of polycarbonate, polyester carbonate copolymer, poly(ethylene terephthalate), poly(butylene terephthalate) and optional impact modifier.

US 2008/0269399 discloses a composition comprising a polyester-polycarbonate polymer comprising isophthalate-terephthalate-resorcinol ester units and carbonate units, a first polyester selected from poly( ethylene terephthalate), poly(ethylene isophthalate), or a combination thereof, and a second polyester comprising butylene terephthalate units, cyclohexanedimethylene terephthalate units, or a combination of cyclohexanedimethylene terephthalate units and ethylene terephthalate units. The composition according to the invention disclosed preferably does not contain a polyester-polycarbonate polymer such as disclosed in this publication.

The present inventors have found that a composition comprising aromatic polycarbonate and poly(butylene terephthalate) as the polyester wherein the aromatic polycarbonate comprises melt polycarbonate, has a lower heat resistance compared to an otherwise identical composition but wherein the aromatic polycarbonate consists of interfacial polycarbonate.

It is therefore an object of the invention to provide a composition comprising aromatic polycarbonate and polyester, wherein the aromatic polycarbonate comprises melt polycarbonate, and wherein the composition has a good heat resistance. In that respect the term heat resistance means the resistance to deformation upon increasing temperature such as typically measured as a Vicat softening temperature and/or a heat distortion temperature, sometimes also referred to as heat deflection temperature.

The present inventors found that the addition of a polymer to either or both the aromatic polycarbonate phase

or the polyester phase may have the desired effect on the heat resistance provided such a polymer is miscible with the respective phase and provided it has a glass transition temperature, Tg, that is higher than the glass transition temperature of the polymer to which it is added.

The term "miscible" in this context is to be understood that the added polymer will form a continuous phase with the polymer to which it is added. Put differently the aromatic polycarbonate will be monophasic even after addition of a further polymer and likewise the polyester phase will be monophasic even after addition of a further polymer.

The present inventors have found in particular that compositions comprising melt polycarbonate, poly(butylene terephthalate) and poly(ethylene terephthalate), show improved heat resistance properties, in particular an improved Vicat softening temperature (VST) and/or heat distortion temperature (HDT).

Accordingly the present invention relates to a composition comprising from 25 - 75wt.% of aromatic polycarbonate comprising melt polycarbonate and from 75 - 25 wt.% of polyester based on the combined weight of the aromatic polycarbonate and the polyester, wherein said aromatic polycarbonate has an endcap level of at most 75 mol % and said polyester comprises polybutylene terephthalate, and wherein

i) said polyester comprises a polymer miscible with poly(butylene terephthalate), said polymer having a glass transition temperature higher than the glass transition temperature of said poly(butylene terephthalate) and/or,
ii) said aromatic polycarbonate comprises a polymer miscible with said melt polycarbonate, said polymer having a glass transition temperature higher than the glass transition temperature of said melt polycarbonate.

In the context of the present invention a higher glass transition temperature means that the glass transition temperature of the polymer that is added is at least 5 °C higher than the glass transition temperature of the polymer to which the further polymer is added.

It is preferred that the polymer miscible with poly(butylene terephthalate) is selected from the group consisting of poly(ethylene terephthalate), poly(ethylene naphthalate), poly(butylene naphthalate), poly(trimethylene terephthalate) and mixtures of at least two of the foregoing.

It is preferred that the polymer miscible with melt polycarbonate is selected from the group consisting of styrene-methyl acrylate copolymers and polycarbonates comprising carbonate units derived from at least one of the monomers 3,3-bis(4-hydroxyphenyl)-2-phenylisoindolin-1-one (PPPBP), 1, I-bis(4-hydroxyphenyl)-1-phenyl-ethane (bisphenol-AP) and 1,1-bis(4-hydroxyphenyl)-3,3,5- trimethyl-cyclohexane (bisphenol-TMC). These polymers are all well-known to the skilled person.

The present inventors found that found that the use of further polymer having a higher glass transition temperature compared to the polymer with which it is miscible results in an increase in the heat resistance of the composition as a whole and accordingly such a further polymer can be used to compensate for the drop in heat resistance caused by the use of melt polycarbonate having a relatively low endcap level instead of interfacial polycarbonate (having a high endcap level).

The amount of further polymer having a higher glass transition temperature may be from 1 - 30 w.t%, preferably from 5 - 20 wt.%, more preferably from 5 - 15 wt.% based on weight of the respective phase, i.e. based on the weight of either the aromatic polycarbonate or the polyester as the case may be.

It is in particular preferred that the present invention relates to a composition comprising from 25 - 75wt.% of aromatic polycarbonate comprising melt polycarbonate and from 75 - 25 wt.% of polyester based on the combined weight of the aromatic polycarbonate and the polyester, wherein said polyester comprises poly(butylene terephthalate and poly(ethylene terephthalate), and wherein said aromatic polycarbonate has an endcap level of at most 75 mol %. In such a composition the aromatic polycarbonate preferably does not comprise a further polymer having a higher glass transition temperature except for an optional amount of interfacial polycarbonate homopolymer based on bisphenol A.

To that extent the present inventors found in particular that the use of polyethylene terephthalate as a component in the polyester phase increase the heat resistance of the composition as a whole and accordingly an amount of polyethylene terephthalate compensates for the drop in heat resistance caused by the use of melt polycarbonate having a relatively low endcap level. Poly(ethylene terephthalate) is a widely available and low cost thermoplastic material that is well miscible with poly(butylene terephthalate). It has a glass transition temperature of about 5-10°C higher than the glass transition temperature of poly(butylene terephthalate).

By application of the invention, the foregoing object is met, at least in part.

The following description applies to all aspects of the invention including any preferred aspect.

A polycarbonate obtained by the melt transesterification process is known to be structurally different from polycarbonate obtained by the interfacial process. In that respect it is noted that in particular melt polycarbonate typically has a minimum amount of Fries branching, while Fries branching is generally absent in interfacial polycarbonate.

In view of the difference between these two processes, also the terminal hydroxyl group content typically differs. In the interfacial process typically the end-capping levels of the aromatic polycarbonate are very high (≥ 90 mol %) and thereby all of the terminal hydroxyl groups can be end-capped with an endcapping agent so that the terminal hydroxyl

group content for interfacial polycarbonate can be as low as 0 ppm. On the other hand the melt polycarbonate process typically results in polycarbonate having a terminal hydroxyl group contents of at least about 150 ppm, at least 200 or at least 250 ppm.

Polycarbonate

The aromatic polycarbonate in the composition according to the invention comprises melt polycarbonate and has an endcap level of at most 75 mol%, preferably at most 65 mol%. For the purpose of the present invention, it is noted that the endcap level is considered as a value measured on the aromatic polycarbonate of the composition. Accordingly in case of a mixture of different types of aromatic polycarbonates, the endcap level corresponds to the endcap level of the polycarbonate mixture. This implies that aromatic polycarbonates in the mixture may have by itself an endcap level that is higher than 75 mol%.

The aromatic polycarbonate may be a mixture of melt polycarbonate and a polycarbonate not manufactured using the melt process, such as the interfacial process, as long as the endcap level is at most 75 mol%. Thus, by way of example an amount of interfacial polycarbonate with an endcap level of about 100 mol% may be mixed with an amount of melt polycarbonate having an endcap level of about 60 mol% as long as the measured endcap level of the mixture is at least 75 mol%.

For the avoidance of doubt the interfacial polycarbonate, if any, may be a mixture of two or more interfacial polycarbonates. Likewise, the melt polycarbonate may be a mixture of two or more melt polycarbonates.

It is preferred that the aromatic polycarbonate contains at least 50 wt.%, more preferably at least 75 wt.%, more preferably at least 95 wt.% of melt polycarbonate, based on the amount of the aromatic polycarbonate. The aromatic polycarbonate may essentially consist or consist of melt polycarbonate provided of course that the aromatic polycarbonate has an endcap level of at most 75 wt.%. Thus, if the aromatic polycarbonate consists of melt polycarbonate then the melt polycarbonate has an endcap level of at most 75 mol%. If the aromatic polycarbonate consists of melt polycarbonate then the melt polycarbonate may be a mixture of two melt polycarbonates, for example a mixture of melt polycarbonates which mutually differ in molecular weight, Fries branching and/or endcap level. Preferably, the aromatic polycarbonate consists of melt polycarbonate with an endcap of at most 75 mol%.

The composition of the invention generally does not comprise polycarbonate other than aromatic polycarbonate. Preferably and for the purpose of the present invention a polyester carbonate or a polyester polycarbonate copolymer, is/are not considered as an aromatic polycarbonate.

The melt polycarbonate is an aromatic polycarbonate obtained by reacting a bisphenol and a diarylcarbonate, where the bisphenol is preferably bisphenol A (BPA) and the diarylcarbonate is preferably diphenyl carbonate (DPC). The aromatic polycarbonate is preferably a linear aromatic polycarbonate meaning that the melt transesterification is carried out on the basis of the bisphenol and diarylcarbonate in absence of any branching agent, such as for example multi-functional alcohols. For the purpose of the present invention the melt polycarbonate may however branched or linear.

Notwithstanding the foregoing it is well known that the melt transesterification process for the manufacture of polycarbonate, wherein bisphenol a and diphenyl carbonate are reacted in molten conditions thereby releasing phenol, results in a certain amount of branching, known as Fries branching. The amount of Fries branching depends inter alia on the type and amount of transesterification catalyst that is used as well as the reaction conditions that are applied, in particular the temperature, pressure and residence times. Thus, a linear polycarbonate in the context of the present invention will contain a certain amount of Fries branching. It is however to be understood that the polycarbonate in the present invention is preferably manufactured in absence of a branching agent, i.e. an agent that includes three or more functional groups and thereby introduces branching or crosslinking of the polycarbonate.

The amount of Fries branching is at least 1000 ppm, preferably 1200 ppm, more preferably 1500 ppm and at most 2000 ppm. The term Fries branching is known to the skilled person and refers inter alia to the structures as disclosed in EP2174970 and reproduced below as structures (1) to (5), yet may include further branched structures.

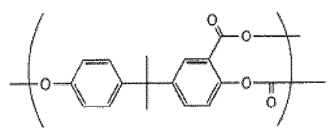
(1)

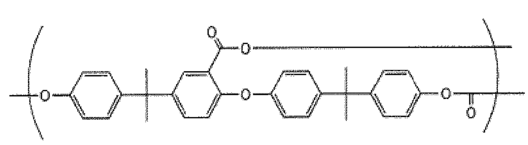
(2)

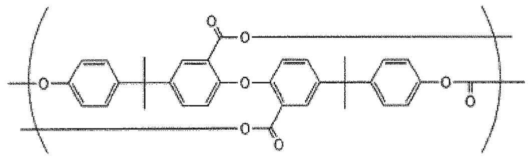

(3)

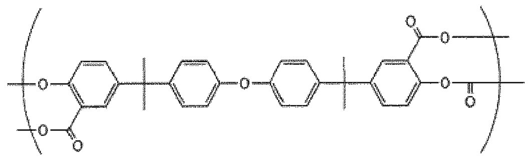

(4)

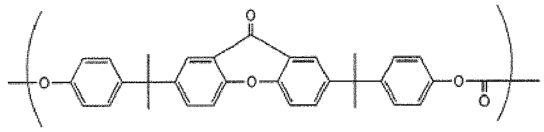

(5)

WO 2011/120921 discloses that units such as disclosed in EP 217940 are Fries branching species. Methods for determining the amount of Fries branching are known to the skilled person and generally include the methanolysis of the polycarbonate followed by HPLC chromatography to identify the total amount of Fries structures. In addition, NMR techniques can be used to determine the type and amount of these Fries structures, such as the respective amounts of linear and branched Fries structures.

It is preferred that the polycarbonate has a weight average molecular weight, Mw, of at least 15,000 to 60,000 g/mol, determined on the basis of polystyrene standards.

The desired endcap level of the melt polycarbonate can be obtained in several ways. For example, the endcap level can be set by selecting the appropriate processing conditions during the melt polycondensation reaction. In particular, the ratio of diaryl carbonate to bisphenol and in addition to that, the type and amount of catalyst can be used to control the endcap level.

Alternatively or in addition to this an end-capping agent (also referred to as a chain stopper agent or chain-terminating agent) can be included during polymerization to provide end groups. The end- capping agent (and thus end groups) are selected based on the desired properties of the polycarbonates. The end-capping agent is preferably selected from paracumyl phenol, dicumyl phenol, p-tert-butyl phenol and mixtures of at least two of said end-capping agents. In the context of the present invention it is preferred that no endcapping agent is used and that the melt polycarbonate is obtained solely on the basis of a bisphenol and a diaryl carbonate, with BPA and DPC being the preferred starting materials or monomers.

The amount of end-capping agent to be employed depends on the exact location and conditions of where the end-capping agent is introduced during the melt transesterification process and further on the type and the desired level of end-capping of the polycarbonate.

The endcap level is calculated with the following Formula I

$$\%EC = 100 - \left(\frac{ppmOH \times Mn}{340000}\right) \qquad \text{I}$$

wherein %EC is the endcap level, ppmOH is the amount of hydroxyl end groups in parts per million by weight and Mn is the number average molecular weight of the polycarbonate based on polycarbonate standards.

In accordance with the invention the aromatic polycarbonate has an endcap level of at most 75 mol % wherein the endcap level is defined as the percentage of polycarbonate chain ends which are not hydroxyl groups. Thus, a polycarbonate having and endcap level of 75 mol % means that the polycarbonate has 25 mol % of chain ends that are phenolic OH end groups, usually resulting from the bisphenol A monomer. The other 75 mol % of end groups do not contain a OH end group and may be phenolic or correspond to the end capping agent molecule(s).

The endcap level is defined as the mole percentage of end-groups of the polycarbonate that is not a hydroxyl group and can be calculated from the amount of terminal OH groups in the polycarbonate and the number average molecular weight (Mn) in accordance with Formula I.

The aromatic polycarbonate preferably comprises from 1-30, preferably from 5- 20 wt.% of a high heat polycarbonate or a styrene methyl acrylate copolymer. High heat polycarbonates are known to a skilled person and are preferably selected from one or more of the group consisting of polycarbonates comprising carbonate units derived from at least one of the monomers 3,3-bis( 4-hydroxyphenyl)-2-phenylisoindolin-1-one (PPPBP), 1, I-bis(4-hydroxyphenyl)-1-phenyl-ethane (bisphenol-AP) and 1,1-bis(4-hydroxyphenyl)-3,3,5- trimethyl-cyclohexane (bisphenol-TMC). Typically such polycarbonates are copolymers having both carbonate units derived from bisphenol A and one or more of the carbonate units mentioned above.

The aromatic polycarbonate other than the high heat polycarbonate, whether it consists of melt polycarbonate or is comprised of a mixture comprising melt polycarbonate is preferably bisphenol A polycarbonate homopolymer. Thus, when the aromatic polycarbonate, other than the high heat polycarbonate, consists of melt polycarbonate then the melt polycarbonate is preferably bisphenol A polycarbonate homopolymer and when the aromatic polycarbonate other than the high heat polycarbonate comprises melt polycarbonate and one or more further polycarbonates, such as interfacial polycarbonate, then preferably all such polycarbonate (other than the high heat polycarbonate) is bisphenol A polycarbonate homopolymer.

The aromatic polycarbonate in accordance with the invention preferably does not comprise a copolymer, such as for example polycarbonate-polysiloxane copolymers.

It is further preferred that apart from aromatic polycarbonate the composition as disclosed herein does not comprise non-aromatic polycarbonate.

The composition as disclosed herein does not comprise polyester-polycarbonate (co)polymer such as for example a copolymer of bisphenol A and isophtalate-terephthalate-resorcinol as e.g. disclosed in US 2008/0269399 and US20070155913A1.

Polyester

The polyester in the composition disclosed herein preferably comprises pol(butylene terephthalate) and a further polyester selected from the group of poly(ethylene terephthalate), polyethylene naphthalate, polybutylene naphthalate, polytrimethylene terephthalate and mixtures thereof. The amount of further polyester may be from 5 to 20 wt.%, preferably 8 to 15 wt.%, based on the weight of the polyester.

Accordingly, it is preferred that the polyester comprises, essentially consists or consists of 5 to 20 wt. % of said further polyester and 95 to 80 wt. % of poly(butylene terephthalate). More preferably the polyester comprises 8 to 15 wt. % of said further polyester and from 92 to 85 wt. % of a poly(butylene terephthalate), based on the weight of the polyester.

In a preferred aspect of the invention the polyester of the composition disclosed herein comprises, essentially consists of or consists of poly(butylene terephthalate) and poly(ethylene terephthalate). The poly(butylene terephthalate) may be a mixture of two or more different poly(butylene terephthalate)s, for example a mixture of poly(butylene terephthalate)s with mutually different molecular weights. Polyesters like poly(butylene terephthalate) and poly(ethylene terephthalate) are known to a skilled person per se and readily available. The poly(ethylene terephthalate) may be a mixture of two or more different polyethylene terephthalate)s, for example a mixture of poly(ethylene terephthalate)s with mutually different molecular weights.

In a particularly preferred embodiment, the polyester comprises poly(butylene terephthalate) (PBT) and poly(ethylene terephthalate) (PET). It is preferred that the poly(butylene terephthalate) has a weight average molecular weight of 50,000 to 150,000 g/mol as determined using gel permeation chromatography with polystyrene standards. The preferred range for the intrinsic viscosity is from 0.6 - 0.9.

It is preferred that the polyester comprises, essentially consists or consists of 5 to 20 wt. % of poly(ethylene terephthalate), and 95 to 80 wt. % of poly(butylene terephthalate). Preferably the polyester comprises 8 to 15 wt. % of poly(ethylene terephthalate) and from 92 to 85 wt. % of a poly(butylene terephthalate), based on the weight of the polyester.

The amount of polyester other than poly(butylene terephthalate) and poly(ethylene terephthalate) may be at most 50 wt.%, preferably at most 35 wt.%, more preferably at most 15 wt.% based on the weight of polyester in the composition. It is preferred that the polyester essentially consists or consists of than poly(butylene terephthalate) and poly(ethylene terephthalate).

The polyesters in the polyester phase of the composition are preferably semi-crystalline, in particular if the composition further comprises a nucleating agent.

Nucleating agents

The composition disclosed herein can further include one or more nucleating agents. In that respect the term nucleating agent refers to an additive that enhances the formation of crystals in the polyester phase of the composition. Addition of a nucleating agent will accordingly increase the crystallinity of the polyester phase which results in an increased

heat resistance. Talc is particularly preferred as nucleating agent. The composition preferably comprises, based on the weight of the composition, from 0.01 to 5 wt.%, with preference from 0.02 to 1 wt.% and particularly preferably from 0.05 to 0.2 wt.%, of nucleating agents, based on the weight of the composition.

Other additives

Typical additives that are used in the composition can comprise one or more of an impact modifier, flow modifier, filler, reinforcing agent (e.g., glass fibers or glass flakes), antioxidant, heat stabilizer, light stabilizer, UV light stabilizer and/or UV absorbing additive, plasticizer, lubricant, release agent, in particular glycerol monostearate, pentaerythritol tetra stearate, glycerol tristearate, stearyl stearate, antistatic agent, antifog agent, antimicrobial agent, colorant (e.g., a dye or pigment), flame retardant either or not combined with an anti-drip agent such as polytetrafluoroethylene (PTFE) or PTFE-encapsulated styrene-acrylonitrile copolymer.

Suitable impact modifiers are typically high molecular weight elastomeric materials derived from olefins, monovinyl aromatic monomers, acrylic and methacrylic acids and their ester derivatives, as well as conjugated dienes. The polymers formed from conjugated dienes can be fully or partially hydrogenated. The elastomeric materials can be in the form of homopolymers or copolymers, including random, block, radial block, graft, and core-shell copolymers. Combinations of impact modifiers can be used. The amount of impact modifier may be from 1-20 wt.%, preferably from 5 - 15 wt.% based on the weight of the composition.

The compositions can be manufactured by various methods known in the art. For example, polycarbonate, poly(butylene terephthalate), poly(ethylene terephthalate), and other components are first blended, optionally with any fillers or additives, in a high speed mixer or by hand mixing. The blend is then fed into the throat of a twin-screw extruder via a hopper. Compositions described herein were typically extruded on a WP 25 millimeter (mm) co-rotating intermeshing twin-screw extruder having UD of 41. Alternatively, at least one of the components can be incorporated into the composition by feeding it directly into the extruder at the throat and/or downstream through a side feeder, or by being compounded into a masterbatch with a desired polymer and fed into the extruder. The extruder is generally operated at a temperature higher than that necessary to cause the composition to flow. In a typical experiment, the extruder was set with barrel temperatures between 150°C and 260°C. The material was run maintaining torque of 55-60% with a vacuum of 100 millibar (mbar) - 800 mbar applied to the melt during compounding. The extrudate can be immediately cooled in a water bath and pelletized. The pellets so prepared can be one-fourth inch long or less as desired. Such pellets can be used for subsequent molding, shaping, or forming.

Shaped, formed, or molded articles comprising the compositions are also provided. The compositions can be molded into useful shaped articles by a variety of methods, such as injection molding, extrusion, blow molding and thermoforming. Some example of articles include automotive and vehicular body panels such as bumper covers and bumpers or a housing for electrical equipment.

Accordingly, the present invention relates to an article comprising or consisting of the composition disclosed herein. More in particular the present invention relates to vehicular body parts or for housing of electrical equipment comprising or consisting the composition disclosed herein. Likewise, the present invention relates to a vehicle or an electrical equipment comprising said vehicular body part or said housing.

The present invention relates to the use of the composition disclosed herein for the manufacture of an article of manufacture, such as an automotive part.

The present invention further relates to the use of poly(ethylene terephthalate) in a composition comprising from 25 - 75wt.% of aromatic polycarbonate comprising melt polycarbonate and from 75 - 25 wt.% of polyester based on the combined weight of the aromatic polycarbonate and the polyester, wherein said polyester comprises poly(butylene terephthalate and said poly(ethylene terephthalate), wherein said aromatic polycarbonate has an endcap level of at most 75 mol % for improving the heat stability, preferably the vicat softening temperature and/or the heat distortion temperature of said composition when compared to an otherwise identical composition wherein the polyester does not contain poly(ethylene terephthalate).

Composition

It is preferred that the composition disclosed herein comprises from 25 - 75 wt.% of aromatic polycarbonate and from 75 - 25 wt.% polyester. More preferably the composition comprises from 35 - 65 wt.% or 40 - 60 wt.% of aromatic polycarbonate and from 65 - 35 wt.% or from 60 - 40 wt.% of polyester, based on the combined amount of aromatic polycarbonate and polyester.

In an aspect, it is preferred that the aromatic polycarbonate consists of melt polycarbonate and that the polyester consists of poly(butylene terephthalate) and poly(ethylene terephthalate). The aromatic polycarbonate is preferably bisphenol A polycarbonate homopolymer.

It is preferred that the composition as disclosed herein has a Vicat softening point, as determined by ISO-306

B120 at a load of 50N and a speed of 120°C/hr of at least 90%, preferably at least 95%, of the Vicat softening point of an otherwise identical composition wherein the aromatic polycarbonate consists of interfacial polycarbonate. For the avoidance of doubt, the term "otherwise identical" means only the indicated material, in this case the aromatic polycarbonate is different. All other materials of the composition and their respective amounts are identical.

It is preferred that the composition as disclosed herein has a heat distortion temperature, as determined by as determined by ISO 75 flatwise at a load of 0.45 MPa, of at least 90%, preferably at least 95% of the heat distortion temperature of an otherwise identical composition wherein the aromatic polycarbonate consists of interfacial polycarbonate.

In the composition disclosed herein the combined amount of polyester and aromatic polycarbonate is preferably at least 85 wt.%, more preferably at least 90 wt.%, 95 wt.% or 98 wt.% based on the total weight of the composition.

It is preferred that the composition comprises at most 3 wt.%, based on the weight of the composition, of a filler such as a glass or glassy filler, specifically a glass fiber, a glass flake, and a glass bead, talc, or mica.

It is preferred that the composition does not contain fillers and in particular that the composition does not contain one or more of glass fibers, glass flakes, glass beads talc or mica, provided that talc may be added, as a nucleating agent, in an amount of at most 1 wt.%.

The present invention will now be further elucidated based on the following non-limiting examples.

Test Methods

Fries branching:

The amount of Fries branching was determined using an Agilent 1100series HPLC equipped with a MWD G1365B detector. The column is an Agilent Zorbax Eclipse XDB-C18 4.6 x 75 mm. The injection volume is 50ml. The oven temperature is 35 °C and the wavelength to acquire data is 320.16 nm. For sample preparation 0.3g of sample is dissolved in 7.5 ml of a solvents mixture based on 5 ml of tetrahydrofuran and 2.5 ml of a 10 % of potassium hydroxide solution in methanol, after heating this sample at 40°C during 20 min, 1.4 ml of acetic acid is added.

Molecular weight

The molecular weight of the polycarbonate and poly(butylene terephthalate) was measured by GPC method with polystyrene standard in an Agilent 1260 Infinity (SYS-LC-1260) equipment with PLGel 5um Minimix C 250 x4.6 mm column and Refractive Index detector. The sample is dissolved in dichloromethane and the same solvent is used as carrier. Based on the molecular weight determined based on polystyrene standards (number average), the endcap level for polycarbonate can be calculated.

Viscosity

The intrinsic viscosity of the polyesters was measured in 1:1 weight to weight mixture of phenol: 1,1,2,2 - tetrachloro ethane at 30°C.

Endcap level

The endcap level was determined based on UV measurement to determine the amount of terminal OH groups. Combined with the number average molecular weight the endcap level is then determined in accordance with Formula I. The UV spectrophotometer was a Perkin Elmer Lambda 800. Measurements were carried out on 0.01g of a polycarbonate sample diluted in 10 ml of dichloromethane and placed into a quartz cuvette of 10 mm of optical path. The wavelength to acquire data are 284 and 292 nm. The results from the equipment as ppm of OH are used to calculate the endcap using also the molecular weight of the polycarbonate and according to the formula for calculation as disclosed herein.

End-capping agent concentration

The amount of polymer chains end-capped with the added end-capping agent was determined based on HPLC measurement using the same procedure techniques as for the Fries branching. The amount of bulky end-groups equals the sum of the amount of OH end-groups (originating from BPA) and the amount of end-groups. Preferably, the amount of bulky end groups is at most 75%, more preferably at most 65%. This percentage is a mol%.

Vicat softening temperature (Vicat)

The Vicat softening point (in °C) was determined in accordance with ISO 306 at a load of 50N and a speed of 120°C/hr on injection molded samples.

Heat distortion temperature (HDT)

The heat distortion temperature, HDT (in °C) was determined in accordance with ISO 75 flatwise at a load of 0.45 MPa.

Impact

All samples were molded via injection molding with the molding machine set from 40 - 280°C and mold set at 65°C, and tested for notched Izod impact strength (in units of Joules per meter) according to ASTM D 256. The standard specimen for ASTM is 64 x 12.7 x 3.2 mm (2½ x ½ x 1/8 inch). The depth under the notch of the specimen is 10.2 mm (0.4 inches).

Tensile modulus

The tensile modulus (in units of gigapascals; Gpa) and % nominal strain at break were tested according to ASTM D 638 measured at room temperature (23 °C).

Melt Volume Rate (MVR)

The MVR ($cm^3$/ 10 min) of the composition was measured in accordance with ASTM D 1238 at 250 °C under load of 5kg.

Glass transition temperature (Tg)

Glass transition temperatures were determined by dual cantilever three point bending dynamic rheology wherein the temperature was increased from 23 °C to 250 °C and frequency of 6.28 rad/sec.

EXAMPLES

The examples were made by melt mixing the materials in a 25mm twin screw extruder. All components were dry-mixed and added to the throat of the extruder. The extruder was set with barrel temperatures between 150°C and 260°C. The material was run maintaining torque of 55-60% with a vacuum of 100 - 800 mbar applied to the melt during compounding. The composition was pelletized after exiting the die head.

Table 1: Components of the compositions and their source

| Component | Trade name/Supplier |
|---|---|
| PC1 | A Polycarbonate produced by interfacial route from Bisphenol A and Phosgene having MVR of 6cc/10 min, almost 100% capped, Fries branching ~ 0 ppm and available from SABIC. |
| PC2 | Polycarbonate produced via the melt transesterification of diphenyl carbonate and bisphenol A, and having a MVR of 6 cc/10min, an endcap level of 65% and an amount of Fries branching of 1100 ppm and available from SABIC. |
| PC3 | Polycarbonate produced via the melt transesterification of diphenyl carbonate and bisphenol A, having a MVR of 6 cc/10min, an endcap level of 85% and an amount of Fries branching of 1400 ppm. |
| PBT | A poly(butylene terephthalate) having an intrinsic viscosity of 1.2 dl/g available from Chang Chun Plastics, Taiwan - grade used PBT 315 |
| PCDT | Poly (cyclohexane dimethanol terephthalate) having an intrinsic viscosity of 0.8 dl/g commercially available from SK Corp under the tradename as SKYPURA |

(continued)

| Component | Trade name/Supplier |
|---|---|
| PET1 | A poly(ethylene terephthalate) having an intrinsic viscosity of 0.9 dl/g, RELPET G5801 available from Reliance Industries, India |
| PET2 | A poly(ethylene terephthalate) (grade name BC 212) having an intrinsic viscosity of 0.84 dl/g available from SABIC, KSA |
| PET3 | A poly(ethylene terephthalate) (grade name BC 211) having an intrinsic viscosity of 0.76 dl/g available from SABIC, KSA |
| Quencher | Monozinc Phosphate |
| Nucleating agent | Fine talc of around 1 micron, commercially available as Jetfine 3 CA from the company Imerys |
| Stabilizer | Pentaerythritol tetrakis[3-[3,5-di-tert-butyl-4-hydroxyphenyl]propionate, commercially available under the name Irganox 1010 from Ciba Specialty Chemicals |
| Impact Modifier | MBS core shell impact modifier, Paraloid EXL™ 2650J commercially available from Dow, Singapore |

Table 2: Formulations and properties for the PC - polyester composition (in absence of nucleating agent)

| | CE1 | CE2 | CE3 | Ex 1 | Ex 2 | Ex 3 |
|---|---|---|---|---|---|---|
| **PC1** | 44.91 | | | | | |
| **PC2** | | 44.91 | 44.91 | 44.91 | 44.91 | 44.91 |
| **PBT** | 44.91 | 44.91 | 29.91 | 29.91 | 29.91 | 29.91 |
| **PCDT** | | | 15 | | | |
| **PET1** | | | | 15 | | |
| **PET2** | | | | | 15 | |
| **PET3** | | | | | | 15 |
| **Impact Modifier** | 10 | 10 | 10 | 10 | 10 | 10 |
| **Quencher** | 0.1 | 0.1 | 0.1 | 0.1 | 0.1 | 0.1 |
| **Stabilizer** | 0.08 | 0.08 | 0.08 | 0.08 | 0.08 | 0.08 |
| **Tensile Modulus (GPa)** | 2.1 | 2.1 | 2.1 | 2.1 | 2.1 | 2.2 |
| **NII (J/m) @ 23 C** | 605 | 703.3 | 603 | 700 | 601 | 585 |
| **NII (J/m) @ -30 C** | 605 | 663 | 575 | 422 | 483 | 414 |
| **Tg of PC in C** | 137 | 133 | 127 | 139 | 139 | 139 |
| **VST@ 50C/50N** | 126 | 121 | 115 | 125 | 125 | 125 |
| **VST@ 120C/50N** | 127 | 122 | 118 | 127 | 127 | 131 |
| **MVR (cc/10mins) @ 250C, 5kg** | 11.5 | 11.3 | 5.5 | 10.3 | 6.7 | 6.6 |

COMPARATIVE EXAMPLES 1-3 AND EXAMPLES 1-2

Comparative Example 1 demonstrates the Vicat and HDT values of a composition where the polycarbonate has been prepared by the interfacial process. Comparative Example 2 demonstrate the Vicat and HDT values of a polycarbonate-PBT composition, where the aromatic polycarbonate has been prepared by the melt process. Comparative Example 3 demonstrate the Vicat and HDT values of a polycarbonate-PBT-PCDT composition, where the aromatic polycarbonate has been prepared by the melt process. Compared to CE3, in Ex 1 - 3, the PCDT has been replaced by

different grades of PET. The amounts in Table 2 are in weight percent based on the total weight of the composition. In all the examples, the total amount of components, equals 100 weight percent. Table 2 shows that addition of PET to a polycarbonate-PBT composition, wherein the aromatic polycarbonate was prepared by the melt process having endcap levels of at most 75 mol %. surprisingly leads to an increase in the heat resistance.

Table 3: Formulations and properties for PC - polyester composition (in presence of a nucleating agent)

| | CE1 | CE2 | Ex 1 | Ex 4 | Ex 5 |
|---|---|---|---|---|---|
| **PC1** | 44.91 | | | | |
| **PC2** | | 44.91 | 44.91 | 44.81 | |
| **PC3** | | | | | 44.91 |
| **PBT** | 44.91 | 44.91 | 29.91 | 29.81 | 29.91 |
| **PET1** | | | 15 | 15 | 15 |
| **Nucleating agent** | | | | 0.2 | 0.2 |
| **Impact Modifier** | 10 | 10 | 10 | 10 | 10 |
| **Quencher** | 0.1 | 0.1 | 0.1 | 0.1 | 0.1 |
| **Stabilizer** | 0.08 | 0.08 | 0.08 | 0.08 | 0.08 |
| **Tensile Modulus (GPa)** | 2.1 | 2.1 | 2.1 | 1.9 | 1.9 |
| **NiI (J/m) @ 23 °C** | 715.3 | 703.3 | 700 | 487 | 537 |
| **NiI (J/m) @ -30 °C** | 605 | 663 | 326 | 166 | 470 |
| **Tg of PC in °C** | 137 | 133 | 139 | 140 | 140 |
| **VST @ 50 °C/50N** | 126 | 121 | 125 | 129 | 131 |
| **VST @ 120 °C/50N** | 127 | 122 | 118 | 132 | 133 |
| **HDT@1.8Mpa** | 78 | 71.3 | 75.4 | 76.2 | 80.9 |
| **HDT @0.45Mpa** | 108.7 | 101.2 | 107.5 | 109.1 | 112 |
| **MVR (cc/10min) @ 250 °C, 5kg** | 11.5 | 11.3 | 10.3 | 7.9 | 8.7 |

COMPARATIVE EXAMPLES 1-2 AND EXAMPLES 4-5

Examples 4 and 5 show that with the introduction of a nucleating agent to the PC-Polyester composition, wherein the aromatic polycarbonate has been prepared by the melt process having an end cap value of at most 75 mol% and wherein the polyester consists of PBT and PET, the Vicat and HDT values increase significantly. Subsequently the mechanical properties are demonstrated by the tensile modulus and the NiI values in Table 3.

Table 4 provides further experimental data based on the use of GPPS, SMA and SAN.

| **Table 4** | | | | | |
|---|---|---|---|---|---|
| | **CE3** | **CE4** | **CE5** | **Ex 6** | **CE6** |
| **PC1** | 44.91 | | | | |
| **PC2** | | 44.91 | 44.91 | 44.91 | 44.91 |
| **PBT** | 44.91 | 44.91 | 29.91 | 29.91 | 29.91 |
| **GPPS** | | | 15 | | |
| **SMA** | | | | 15 | |
| **SAN** | | | | | 15 |
| **Impact Modifier** | 10 | 10 | 10 | 10 | 10 |
| **Quencher** | 0.1 | 0.1 | 0.1 | 0.1 | 0.1 |

(continued)

| Table 4 | | | | | |
|---|---|---|---|---|---|
| | CE3 | CE4 | CE5 | Ex 6 | CE6 |
| Stabiliser | 0.08 | 0.08 | 0.08 | 0.08 | 0.08 |
| ASTM Tensile strength (Mpa) | 59 | 58 | 56 | 58 | 59 |
| Tensile Modulus (GPa) | 1949 | 1922 | 2011 | 2117 | 2108 |
| Elongation at break (%) | 201 | 196 | 172 | 147 | 162 |
| NII (J/m) @ 23 °C | 692 | 687 | 517 | 553 | 577 |
| NII (J/m) @ -30 °C | 592 | 622 | 354 | 462 | 513 |
| VST @ 50 °C/50N | 125 | 120 | 111 | 120 | 110 |
| VST @ 120 °C/50N | 126 | 120 | 112 | 124 | 112 |
| MVR (cc/10min) @ 250 °C, 5kg | 12 | 12 | 11 | 11 | 11 |

The data in Table 4 shows the effect of several different polymers. It is noted that all of GPPS, SMA and SAN have a preference to dissolve (i.e. to be miscible with) the aromatic polycarbonate. The glass transition temperature of SMA is higher than the glass transition temperature of polycarbonate. The glass transition temperature of GPPS and SAN is lower than that of polycarbonate.

## Claims

1. A composition comprising from 25 - 75wt.% of aromatic polycarbonate comprising melt polycarbonate and from 75 - 25 wt.% of polyester based on the combined weight of the aromatic polycarbonate and the polyester, wherein said aromatic polycarbonate has an endcap level of at most 75 mol % as determined in accordance with the method set out in the description and said polyester comprises polybutylene terephthalate, and wherein

   i) said polyester comprises a polymer miscible with poly(butylene terephthalate), said polymer having a glass transition temperature higher than the glass transition temperature of said poly(butylene terephthalate) and/or,
   ii) said aromatic polycarbonate comprises a polymer miscible with said melt polycarbonate, said polymer having a glass transition temperature higher than the glass transition temperature of said melt polycarbonate.

2. The composition of claim 1 wherein the polymer miscible with poly(butylene terephthalate) is selected from the group consisting of poly(ethylene terephthalate), polyethylene naphthalate, polybutylene naphthalate, polytrimethylene terephthalate and mixtures of at least two of the foregoing and wherein the polymer miscible with melt polycarbonate is selected from the group consisting of styrene-methyl-acrylate copolymers and polycarbonates comprising carbonate units derived from at least one of the monomers 3,3-bis( 4-hydroxyphenyl)-2-phenylisoindolin-1-one (PPPBP), 1, Ibis(4-hydroxyphenyl)-1-phenyl-ethane(Bisphenol-AP) and 1,1-bis(4-hydroxyphenyl)-3,3,5- trimethyl-cyclohexane (Bisphenol-TMC).

3. The composition of claim 1 or 2, wherein the composition has a Vicat softening point, as determined by ISO-306 B120 at a load of 50N and a speed of 120°C/hr of at least 90% of the Vicat softening point of an otherwise identical composition wherein the aromatic polycarbonate consists of interfacial polycarbonate.

4. The composition of any one or more of claims 1-3, wherein the composition has a heat distortion temperature, as determined by as determined by ISO 75 flatwise at a load of 0.45 MPa, of at least 90% of the heat distortion temperature of an otherwise identical composition wherein the aromatic polycarbonate consists of interfacial polycarbonate.

5. The composition of any one or more of claims 1-4 wherein the melt polycarbonate is obtained via the melt transesterification of a diaryl carbonate, a bisphenol and optionally an end-capping agent selected from the group consisting of paracumyl phenol, dicumyl phenol, p-tert-butyl phenol and mixtures of at least two of said end-capping agents, wherein preferably the diaryl carbonate is diphenyl carbonate, the bisphenol is bisphenol A and the optional end-capping agent is paracumyl phenol.

6. The composition of any one or more of claims 1-5, wherein the melt polycarbonate has a Fries branching content of at most 2000 ppm by weight and at least 1000 ppm by weight.

7. The composition of any one or more of claims 1-6 further comprising a nucleating agent, preferably in an amount of from 0.01 to 5 wt. %, preferably from 0.02 to 1 wt. % and particularly preferably from 0.05 to 0.2 wt. %, based on the weight of the composition.

8. The composition of any one or more of claims 1-7 wherein the aromatic polycarbonate contains at least 50 wt. %, preferably at least 75 wt. %, more preferably at least 95 wt. % of melt polycarbonate, based on the amount of aromatic polycarbonate.

9. The composition of any one or more of claims 1-8, wherein the polymer miscible with the poly(butylene terephthalate) is polyester, wherein preferably the polyester comprises, essentially consists or consists of 5 to 20 wt. % of a poly(ethylene terephthalate) and 95 to 80 wt. % of a poly(butylene terephthalate), based on the combined amounts of the said polyester.

10. The composition of any one or more of claims 1-9 wherein the aromatic polycarbonate has a weight average molecular weight of 15,000 to 60,000 g/mol when determined using gel permeation chromatography with polycarbonate standards and/or wherein the poly(butylene terephthalate) has a weight average molecular weight of 60,000 to 150,000 g/mol as determined using gel permeation chromatography with polystyrene standards.

11. An article comprising or consisting of the composition of any one or more of claims 1-10.

12. The article of claim 11, wherein the article is a vehicular body part or a housing for electrical equipment.

13. A vehicle or an electrical equipment comprising the article of claim 12.

14. Use of a composition of any one or more of claims 1-10 for the manufacture of an article, preferably an automotive part.

15. Use of poly(ethylene terephthalate) in a composition comprising from 25 - 75wt.% of aromatic polycarbonate comprising melt polycarbonate and from 75 - 25 wt.% of polyester based on the combined weight of the aromatic polycarbonate and the polyester, wherein said polyester comprises poly(butylene terephthalate and said poly(ethylene terephthalate), wherein said aromatic polycarbonate has an endcap level of at most 75 mol % for improving the heat stability, preferably the vicat softening temperature and/or the heat distortion temperature of said composition when compared to an otherwise identical composition wherein the polyester does not contain poly(ethylene terephthalate).

**Patentansprüche**

1. Zusammensetzung umfassend von 25 bis 75 Gew.-% an aromatischem Polycarbonat, das Schmelzpolycarbonat umfasst, und von 75 bis 25 Gew.-% Polyester bezogen auf das kombinierte Gewicht des aromatischen Polycarbonats und des Polyesters, wobei das aromatische Polycarbonat einen Endkappengehalt von höchstens 75 mol-% aufweist, wie bestimmt gemäß dem in der Beschreibung beschriebenen Verfahren, und der Polyester Polybutylenterephthalat umfasst, und wobei

   i) der Polyester ein mit Poly(butylenterephthalat) mischbares Polymer umfasst, wobei das Polymer eine Glasübergangstemperatur aufweist, die höher als die Glasübergangstemperatur des Poly(butylenterephthalats) ist, und/oder
   ii) das aromatische Polycarbonat ein mit dem Schmelzpolycarbonat mischbares Polymer umfasst, wobei das Polymer eine Glasübergangstemperatur aufweist, die höher als die Glasübergangstemperatur des Schmelzpolycarbonats ist.

2. Zusammensetzung gemäß Anspruch 1, wobei das mit Poly(butylenterephthalat) mischbare Polymer ausgewählt ist aus der Gruppe bestehend aus Poly(ethylenterephthalat), Polyethylennaphthalat, Polybutylennaphthalat, Polytrimethylenterephthalat und Gemischen von wenigstens zwei der Genannten und wobei das mit Schmelzpolycarbonat

mischbare Polymer ausgewählt ist aus der Gruppe bestehend aus Styrol-Methylacrylat-Copolymeren und Polycarbonaten, die Carbonateinheiten abgeleitet von wenigstens einem der Monomere 3,3-Bis(4-hydroxyphenyl)-2-phenylisoindolin-1-on (PPPBP), 1,1-Bis(4-hydroxyphenyl)-1-phenylethan (Bisphenol-AP) und 1,1-Bis(4-hydroxyphenyl)-3,3,5-trimethylcyclohexan (Bisphenol-TMC) umfassen.

**3.** Zusammensetzung gemäß Anspruch 1 oder 2, wobei die Zusammensetzung einen Vicat-Erweichungspunkt, wie bestimmt gemäß ISO-306 B120, bei einer Last von 50 N und einer Geschwindigkeit von 120 °C/h von wenigstens 90 % des Vicat-Erweichungspunkts einer im Übrigen identischen Zusammensetzung, bei der das aromatische Polycarbonat aus Grenzflächenpolycarbonat besteht, aufweist.

**4.** Zusammensetzung gemäß einem oder mehreren der Ansprüche 1-3, wobei die Zusammensetzung eine Formbeständigkeitstemperatur, wie bestimmt gemäß ISO 75, flach bei einer Last von 0,45 MPa von wenigstens 90 % der Formbeständigkeitstemperatur einer im Übrigen identischen Zusammensetzung, bei der das aromatische Polycarbonat aus Grenzflächenpolycarbonat besteht, aufweist.

**5.** Zusammensetzung gemäß einem oder mehreren der Ansprüche 1-4, wobei das Schmelzpolycarbonat über die Schmelzumesterung eines Diarylcarbonats, eines Bisphenols und gegebenenfalls eines Endverkappungsmittels ausgewählt aus der Gruppe bestehend aus para-Cumylphenol, Dicumylphenol, p-tert-Butylphenol und Gemischen von wenigstens zwei der Endverkappungsmittel erhalten ist, wobei vorzugsweise das Diarylcarbonat Diphenylcarbonat ist, das Bisphenol Bisphenol A ist und das optionale Endverkappungsmittel para-Cumylphenol ist.

**6.** Zusammensetzung gemäß einem oder mehreren der Ansprüche 1-5, wobei das Schmelzpolycarbonat einen Fries-Verzweigungsgehalt von höchstens 2000 Gew.-ppm und wenigstens 1000 Gew.-ppm aufweist.

**7.** Zusammensetzung gemäß einem oder mehreren der Ansprüche 1-6, ferner umfassend einen Keimbildner, vorzugsweise in einer Menge von 0,01 bis 5 Gew.-%, vorzugsweise von 0,02 bis 1 Gew.-% und besonders bevorzugt von 0,05 bis 0,2 Gew.-%, bezogen auf das Gewicht der Zusammensetzung.

**8.** Zusammensetzung gemäß einem oder mehreren der Ansprüche 1-7, wobei das aromatische Polycarbonat wenigstens 50 Gew.-%, vorzugsweise wenigstens 75 Gew.-%, bevorzugter wenigstens 95 Gew.-% Schmelzpolycarbonat enthält, bezogen auf die Menge an aromatischem Polycarbonat.

**9.** Zusammensetzung gemäß einem oder mehreren der Ansprüche 1-8, wobei das mit dem Poly(butylenterephthalat) mischbare Polymer Polyester ist, wobei der Polyester vorzugsweise 5 bis 20 Gew.-% an einem Poly(ethylenterephthalat) und 95 bis 80 Gew.-% an einem Poly(butylenterephthalat), bezogen auf die kombinierten Mengen der Polyester, umfasst, im Wesentlichen daraus besteht oder daraus besteht.

**10.** Zusammensetzung gemäß einem oder mehreren der Ansprüche 1-9, wobei das aromatische Polycarbonat ein gewichtsgemitteltes Molekulargewicht von 15.000 bis 60.000 g/mol aufweist, wenn bestimmt unter Verwendung von Gelpermeationschromatographie mit Polycarbonatstandards, und/oder wobei das Poly(butylenterephthalat) ein gewichtsgemitteltes Molekulargewicht von 60.000 bis 150.000 g/mol aufweist, wie bestimmt unter Verwendung von Gelpermeationschromatographie mit Polystyrolstandards.

**11.** Gegenstand, umfassend oder bestehend aus der Zusammensetzung gemäß einem oder mehreren der Ansprüche 1-10.

**12.** Gegenstand gemäß Anspruch 11, wobei der Gegenstand ein Fahrzeugkarosserieteil oder ein Gehäuse für elektrische Geräte ist.

**13.** Fahrzeug oder elektrisches Gerät, umfassend den Gegenstand gemäß Anspruch 12.

**14.** Verwendung einer Zusammensetzung gemäß einem oder mehreren der Ansprüche 1-10 zur Herstellung eines Gegenstands, vorzugsweise eines Automobilteils.

**15.** Verwendung von Poly(ethylenterephthalat) in einer Zusammensetzung umfassend von 25 bis 75 Gew.-% an aromatischem Polycarbonat, das Schmelzpolycarbonat umfasst, und von 75 bis 25 Gew.-% Polyester bezogen auf das kombinierte Gewicht des aromatischen Polycarbonats und des Polyesters, wobei der Polyester Poly(butylenterephthalat) und das Poly(ethylenterephthalat) umfasst, wobei das aromatische Polycarbonat einen Endkappengehalt von höchstens 75 mol-% aufweist, zum Verbessern der Wärmestabilität, vorzugsweise der Vicat-Erweichungstemperatur und/oder der Formbeständigkeitstemperatur der Zusammensetzung im Vergleich zu einer im Übrigen identischen Zusammensetzung, bei der der Polyester kein Poly(ethylenterephthalat) enthält.

**Revendications**

1. Composition comprenant de 25 à 75 % en poids de polycarbonate aromatique comprenant un polycarbonate fondu et de 75 à 25 % en poids de polyester sur la base du poids combiné du polycarbonate aromatique et du polyester, ledit polycarbonate aromatique ayant un taux de coiffage en terminaison d'au plus 75 % en moles comme déterminé conformément au procédé indiqué dans la description et ledit polyester comprenant un poly(téréphtalate de butylène), et

   i) ledit polyester comprenant un polymère miscible avec un poly(téréphtalate de butylène), ledit polymère ayant une température de transition vitreuse supérieure à la température de transition vitreuse dudit poly(téréphtalate de butylène) et/ou,
   ii) ledit polycarbonate aromatique comprenant un polymère miscible avec ledit polycarbonate fondu, ledit polymère ayant une température de transition vitreuse supérieure à la température de transition vitreuse dudit polycarbonate fondu.

2. Composition selon la revendication 1, le polymère miscible avec un poly(téréphtalate de butylène) étant choisi dans le groupe constitué par un poly(téréphtalate d'éthylène), un poly(naphtalate d'éthylène), un poly(naphtalate de butylène), un poly(téréphtalate de triméthylène) et des mélanges d'au moins deux des composés précédents et le polymère miscible avec un polycarbonate fondu étant choisi dans le groupe constitué par des copolymères de styrène-acrylate de méthyle et des polycarbonates comprenant des motifs de carbonate issus d'au moins un des monomères 3,3-bis(4-hydroxyphényl)-2-phénylisoindolin-1-one (PPPBP), 1,1-bis(4-hydroxyphényl)-1-phényl-éthane (Bisphénol-AP) et 1,1-bis(4-hydroxyphényl)-3,3,5-triméthyl-cyclohexane (Bisphénol-TMC).

3. Composition selon la revendication 1 ou 2, la composition ayant un point de ramollissement Vicat, comme déterminé par la norme ISO-306 B120 à une charge de 50 N et une vitesse de 120 °C/h d'au moins 90 % du point de ramollissement Vicat d'une composition par ailleurs identique, le polycarbonate aromatique étant constitué de polycarbonate interfacial.

4. Composition selon l'une quelconque ou plusieurs des revendications 1 à 3, la composition ayant une température de déformation thermique, comme déterminée par la norme ISO 75 à plat à une charge de 0,45 MPa, d'au moins 90 % de la température de déformation thermique d'une composition par ailleurs identique, le polycarbonate aromatique étant constitué de polycarbonate interfacial.

5. Composition selon l'une quelconque ou plusieurs des revendications 1 à 4, le polycarbonate fondu étant obtenu via la transestérification en fusion d'un carbonate de diaryle, d'un bisphénol et éventuellement d'un agent de coiffage de terminaison choisi dans le groupe constitué par le paracumylphénol, le dicumylphénol, le p-tert-butylphénol et des mélanges d'au moins deux desdits agents de coiffage de terminaison, préférablement le carbonate de diaryle étant le carbonate de diphényle, le bisphénol étant le bisphénol A et l'agent de coiffage de terminaison éventuel étant le paracumylphénol.

6. Composition selon l'une quelconque ou plusieurs des revendications 1 à 5, le polycarbonate fondu ayant une teneur en ramifications Fries d'au plus 2 000 ppm en poids et d'au moins 1 000 ppm en poids.

7. Composition selon l'une quelconque ou plusieurs des revendications 1 à 6 comprenant en outre un agent de nucléation, préférablement en une quantité allant de 0,01 à 5 % en poids, préférablement de 0,02 à 1 % en poids et particulièrement préférablement de 0,05 à 0,2 % en poids, sur la base du poids de la composition.

8. Composition selon l'une quelconque ou plusieurs des revendications 1 à 7, le polycarbonate aromatique contenant au moins 50 % en poids, préférablement au moins 75 % en poids, plus préférablement au moins 95 % en poids de polycarbonate fondu, sur la base de la quantité de polycarbonate aromatique.

9. Composition selon l'une quelconque ou plusieurs des revendications 1 à 8, le polymère miscible avec le poly(téréphtalate de butylène) étant un polyester, préférablement le polyester comprenant, étant essentiellement constitué

de ou étant constitué de 5 à 20 % en poids de poly(téréphtalate d'éthylène) et 95 à 80 % en poids de poly(téréphtalate de butylène), sur la base des quantités combinées dudit polyester.

**10.** Composition selon l'une quelconque ou plusieurs des revendications 1 à 9, le polycarbonate aromatique ayant un poids moléculaire moyen en poids de 15 000 à 60 000 g/mole lorsqu'il est déterminé en utilisant une chromatographie à perméation de gel avec des références de polycarbonate et/ou le poly(téréphtalate de butylène) ayant un poids moléculaire moyen en poids de 60 000 à 150 000 g/mole comme déterminé en utilisant une chromatographie à perméation de gel avec des références de polystyrène.

**11.** Article comprenant ou étant constitué de la composition selon l'une quelconque ou plusieurs des revendications 1 à 10.

**12.** Article selon la revendication 11, l'article étant une pièce de corps de véhicule ou un boîtier pour un appareil électrique.

**13.** Véhicule ou appareil électrique comprenant l'article selon la revendication 12.

**14.** Utilisation d'une composition selon l'une quelconque ou plusieurs des revendications 1 à 10 pour la fabrication d'un article, préférablement d'une pièce d'automobile.

**15.** Utilisation de poly(téréphtalate d'éthylène) dans une composition comprenant de 25 à 75 % en poids de polycarbonate aromatique comprenant un polycarbonate fondu et de 75 à 25 % en poids de polyester sur la base du poids combiné du polycarbonate aromatique et du polyester, ledit polyester comprenant un poly(téréphtalate de butylène) et ledit poly(téréphtalate d'éthylène), ledit polycarbonate aromatique ayant un taux de coiffage en terminaison d'au plus 75 % en moles pour améliorer la stabilité thermique, préférablement la température de ramollissement Vicat et/ou la température de déformation thermique de ladite composition par comparaison avec une composition par ailleurs identique dans laquelle le polyester ne contient pas un poly(téréphtalate d'éthylène).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014097196 A
- WO 2017093232 A
- US 20080269399 A
- EP 2174970 A
- WO 2011120921 A
- EP 217940 A
- US 20070155913 A1